# EUROPÄISCHE PATENTANMELDUNG

(11) **EP 2 829 587 A1**
(43) Veröffentlichungstag der Anmeldung: **28.01.2015**
(21) Anmeldenummer: 13177435.8
(22) Anmeldetag: 22.07.2013
(51) Int. Cl.: C10J 3/02, B01J 20/20, C02F 11/10, C10J 3/84, C10K 1/32

(54) **Vergasungsanlage und Verfahren zur Gewinnung von brennbarem Gas**

(71) Anmelder: KOPF SynGas GmbH & Co. KG, 72172 Sulz-Bergfelden (DE)
(72) Erfinder: Gaiffi, Michael, 72160 Horb (DE); Judex, Johannes, 72072 Tübingen (DE)
(74) Vertreter: Späth, Dieter

(57) **Zusammenfassung**

Die Erfindung betrifft eine Vergasungsanlage und ein Verfahren zur Gewinnung von brennbarem Gas aus Klärschlamm. Der Klärschlamm wird als getrocknetes Klärschlamm-Granulat in einem Feststoffvergaser (2) vergast, durch einen Teerabscheider (3) und Gaswäscher (4, 5), in denen u. a. Schwefelwasserstoff und Ammoniak ausgewaschen werden, und danach durch ein Filter (6) geleitet. Als Filtermaterial dient ein teilchenförmiger Feststoff, der als Granulat im Vergaser (2) anfällt.

## Beschreibung

Die Erfindung betrifft eine Vergasungsanlage und ein Verfahren zur Gewinnung von brennbarem Gas mit den Merkmalen der Oberbegriffe der Ansprüche 1 und 6. Die Vergasung von Biomasse bzw. Klärschlamm zur Gewinnung eines brennbaren Gases ist bekannt. Das gewonnene Gas wird auch als Biogas oder Synthesegas bezeichnet. Biomasse sind insbesondere nachwachsende Rohstoffe oder allgemein pflanzliche und tierische Produkte, wie beispielsweise Exkremente, die in Mist oder Gülle enthalten sind. Das gewonnene Gas ist wie gesagt brennbar und kann einer thermischen Verwertung zugeführt werden. Es kann beispielsweise zum Betrieb eines Gasmotors zur Stromerzeugung verwendet oder zu Heizzwecken verbrannt werden.

Beispielsweise offenbart die Patentanmeldung EP 1 112 970 A1 ein Verfahren und eine Anlage zur Vergasung von Klärschlamm. Der Klärschlamm wird in einen Vergaser eingebracht und dort durch Erhitzen unter Luft- bzw. Sauerstoffmangel thermisch zersetzt. Es entsteht ein brennbares Gas- oder Gasgemisch, das Bio- oder Synthesegas, das zur Strom- und/oder Wärmeerzeugung verwendet werden kann.

Vorzugsweise wird der Klärschlamm vor seiner Vergasung getrocknet, wobei in dem zu vergasenden Klärschlamm immer noch Feuchte enthalten sein kann. Der Klärschlamm wird der Vergasung vorzugsweise in festem Zustand, beispielsweise als Granulat zugeführt und nicht als Schlamm im eigentlichen Sinn. Trotzdem wird das zu vergasende Gut zur Erläuterung der Erfindung als Klärschlamm bezeichnet werden.

Als Schadstoffe enthält das durch die Vergasung gewonnene Synthesegas u. a. Teer, Ammoniak und Schwefelwasserstoff. Zur Reinigung von Teer wird in der bekannten Anlage und nach dem bekannten Verfahren das Synthesegas auf eine Temperatur unter einer Kondensationstemperatur von Teer gekühlt. Anschließend wird das Synthesegas durch den zu vergasenden Klärschlamm geleitet, der als Filter wirkt und das Synthesegas von Teer reinigt. Der aus dem Synthesegas gefilterte Teer wird mit dem Klärschlamm dem Vergaser zugeführt und vergast. Im Vergaser wird der Teer verbrannt und liefert dabei Wärme für die thermische Zersetzung des Klärschlamms und/oder der Teer wird ebenfalls in brennbares Gas, d. h. Synthesegas zersetzt.

Nach dem Ausfiltern des Teers verbleiben u. a. Ammoniak und Schwefelwasserstoff als Schadstoffe im Synthesegas. Bei einer thermischen Verwertung des Synthesegases würden der Ammoniak und der Schwefelwasserstoff teilweise zu Stick- und Schwefeloxiden reagieren, die als Luftschadstoffe im Abgas im günstigsten Fall unerwünscht, jedenfalls emissionsrechtlich problematisch und im weniger günstigen Fall unzulässig sind. Außerdem verursachen Schwefeldioxid oder Schwefelwasserstoff erhebliche Korrosionsprobleme, so dass eine thermische Verwertung des unbehandelten Synthesegases in einem Gasmotor oder einer Gasturbine so gut wie ausgeschlossen ist.

Zur Reinigung des Synthesegas, das aus einer Vergasung von Klärschlamm oder Klärschlamm-Granulat gewonnen worden ist, schlägt die europäische Patentanmeldung EP 2 030 671 A1 zwei Wäscher vor, die das Gas nach der Vergasung und nach einem Ausfiltern von Teer durchströmt. Im ersten der beiden Wäscher wird das Gas aus der Vergasung von Schwefelwasserstoff gereinigt. Der Schwefelwasserstoff wird mit Wasser, das Ammoniak enthält und daher einen hohen pH-Wert aufweist, d. h. alkalisch bzw. basisch ist, ausgewaschen. Im zweiten Wäscher wird das Gas aus der Vergasung von Schwefelwasserstoff gereinigt, es wird Schwefelwasserstoff mit Wasser, das einen pH-Wert von 7 oder weniger aufweist, d. h. das neutral oder sauer ist, ausgewaschen.

Aufgabe der Erfindung ist eine alternative Reinigung von Gas aus einer Vergasung. Insbesondere ist Aufgabe der Erfindung eine Reinigung von Gas aus einer Vergasung von Restschadstoffen, die nach einer Auswaschung von Schwefelwasserstoff und Ammoniak noch im Gas vorhanden sind.

Diese Aufgabe wird erfindungsgemäß durch die Merkmale der Ansprüche 1 oder 6 gelöst. Bei einer Vergasung von Feststoffen fällt außer dem Gas ein thermisch nicht verwertbarer Feststoff an, der auch als Rückstand oder Asche bezeichnet wird und entsorgt werden muss. Der Feststoff fällt in Form von Teilchen mit unterschiedlichen Teilchengrößen an oder kann sich in einem Vergaser absetzen. In letzterem Fall muss der Feststoff mechanisch zerkleinert und aus dem Vergaser entfernt werden. Fällt der Feststoff teilchenförmig an, kann er als Schüttgut, Granulat oder Pulver bezeichnet werden. In Form kleiner Teilchen kann der Feststoff in dem einen Vergaser verlassenden Synthesegas enthalten sein. Feststoff, der aufgrund seiner Teilchengröße einen Vergaser nicht mit dem Synthesegas verlässt, kann durch Schwerkraft oder mechanische Förderung aus dem Vergaser entfernt werden.

Die Erfindung sieht vor, solchen teilchenförmigen Feststoff aus dem Vergaser als Filtermaterial in einem dem Vergaser nachgeschalteten Filter zu verwenden. Nachgeschaltet bedeutet, dass das Gas den Filter nach dem Vergaser durchströmt. Es hat sich gezeigt, dass ein teilchenförmiger Feststoff, der bei einer Feststoffvergasung, jedenfalls bei einer Vergasung von Klärschlamm oder Biomasse anfällt, eine ähnliche Struktur aufweist wie Aktivkohle, nämlich eine offenporige, feinkörnige Struktur mit großer innerer Oberfläche. Der Feststoff weist Adsorptionseigenschaften auf, die denen von Aktivkohle vergleichbar sind, auch wenn die Adsorptionswirkung des bei einer Feststoffvergasung als Rückstand anfallenden Feststoffs geringer als die Adsorptionswirkung von Aktivkohle ist. Aufgrund der Adsorptionseigenschaften des teilchenförmigen Feststoffs, der bei einer Feststoffvergasung anfällt, kann der Feststoff anstelle von Aktivkohle als Filtermaterial verwendet werden. Die Erfindung schlägt die Filterung des durch die Vergasung gewonnen brennbaren Gases mit dem bei der Vergasung anfallenden teilchenförmigen Feststoff als Filtermaterial vor. Der Feststoff aus der Vergasung filtert Schwefelwasserstoff und andere Stoffe aus dem durch Vergasung gewonnen brennbaren Gas. Außer der Gasreinigung von Schadstoffen hat die Erfindung den Vorteil einer Verwertung des bei der Vergasung anfallenden Feststoffs.

Die Erfindung ist insbesondere auf eine Vergasung von Biomasse und speziell von Klärschlamm gerichtet. Allgemeiner umfasst die Erfindung die Vergasung von Feststoffen, die Kohlenwasserstoffe oder andere Bestandteile enthalten, die nach der Vergasung ein brennbares Gas bilden.

Bei der Vergasung entstehender Feststoff kann als Pulver anfallen, das einen Vergaser mit dem Gas verlässt. Es ist im Rahmen der Erfindung möglich, diesen pulverförmigen Feststoff aus dem brennbaren Gas beispielsweise in einem Zyklon-Abscheider abzutrennen und als Filtermaterial für das Gas zu verwenden. Dabei besteht jedoch das Problem, das als Filtermaterial dienende Pulver daran zu hindern, wieder mit dem Gas mitzuströmen. Deswegen sieht die Erfindung vorzugsweise die Verwendung des bei der Vergasung anfallenden Feststoffs vor, dessen Teilchen so groß und schwer sind, dass sie nicht mit dem Gas aus dem Vergaser austreten, sondern durch Schwerkraft oder mechanisch aus dem Vergaser gefördert werden. Dieser Feststoff kann auch als Granulat oder Schüttgut bezeichnet werden.

Ist der teilchenförmigen Feststoff aus dem Vergaser als Filtermaterial verbraucht kann er wie Aktivkohle entsorgt werden.

Vorzugsweise wird nach dem Vergaser Teer in einen Teerfilter oder einem Teerabscheider aus dem durch die Vergasung gewonnenen brennbaren Gas abgetrennt um eine Verschmutzung nachfolgender Anlagenteile mit Teer zu vermeiden. Vorzugsweise wird als Teerfilter der Klärschlamm bzw. das Klärschlamm-Granulat, die Biomasse bzw. der Feststoff verwendet, der im Vergaser vergast wird. Das gewonnene brennbare Gas aus dem Vergaser wird zur Filterung durch den zu vergasenden Stoff geleitet.

Vorzugsweise ist oder sind zwischen dem Vergaser und dem Filter ein oder mehrere Gaswäscher angeordnet, in dem bzw. denen Schwefelwasserstoff und andere Schad- und sonstige Stoffe aus dem brennbaren, durch die Vergasung gewonnen Gas entfernt werden. Im nachgeschalteten Filter, in dem das brennbare Gas mit dem Feststoff, der bei der Vergasung anfällt, gefiltert wird, werden Restschadstoffe aus dem brennbaren Gas gefiltert, die nach der Gaswäsche oder den Gaswäschen noch im Gas vorhanden sind. Auf diese Weise lässt sich Schwefelwasserstoff auf nahezu Null aus dem durch die Vergasung gewonnen, brennbaren Gas entfernen.

Vorzugsweise ist der Gaswäscher oder einer der Gaswäscher ein Schwefelwasserstoff-Wäscher, in dem Schwefelwasserstoff aus dem brennbaren Gas ausgewaschen wird. Als Waschflüssigkeit wird im Schwefelwasserstoff-Wäscher beispielsweise eine alkalische bzw. basische wässrige Lösung verwendet.

Die Erfindung sieht die Vergasung von Biomasse, insbesondere von Klärschlamm zur Gewinnung eines brennbaren Gases vor. Es können auch andere Feststoff vergast und erfindungsgemäß gefiltert werden, um Verunreinigungen, insbesondere Schwefelwasserstoff aus dem gewonnen Gas zu entfernen.

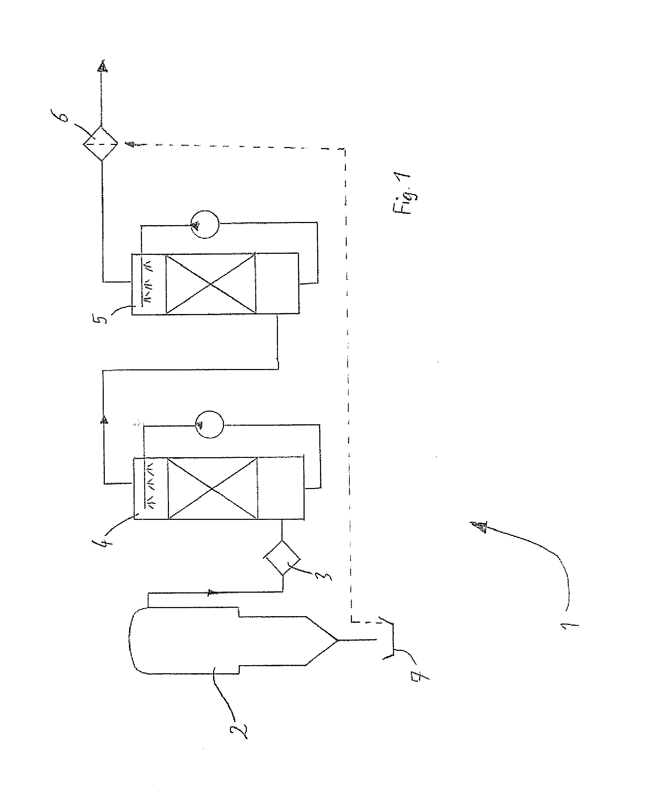

Die Erfindung wird nachfolgend eines in der Zeichnung dargestellten Ausführungsbeispiels näher erläutert. Die einzige Figur zeigt ein Schema einer erfindungsgemäßen Vergasungsanlage.

Die in der Zeichnung dargestellte Vergasungsanlage 1 dient zur Gewinnung von brennbarem Gas aus Klärschlamm. Der Klärschlamm wird als getrocknetes Klärschlamm-Granulat einem Feststoffvergaser 2 zugeführt und vergast. Das dabei gewonnene brennbare Gas, das auch als Synthesegas bezeichnet werden kann, strömt aus dem Vergaser 2 durch einen Teerabscheider 3, zwei aufeinanderfolgende Gaswäscher 4, 5 und danach durch ein Filter 6, wonach es einer thermischen Verwertung zugeführt werden kann. Das gewonnene Gas kann zur Wärmeerzeugung verbrannt, zur Stromerzeugung einem Gasmotor eines Stromaggregats oder zur Wärme- und Stromerzeugung einem Blockheizkraftwerk zugeführt werden (nicht dargestellt).

Bei der Vergasung von Klärschlamm fällt ein teilchenförmiger Feststoff in Form eines Granulats an, der auch als Rückstand aufgefasst werden kann. Der anfallende Feststoff gelangt durch Schwerkraft aus dem Vergaser 2 in einen Sammelbehälter 7 oder wird aus dem Vergaser 2 in den Sammelbehälter 7 gefördert.

Der Teerabscheider 3 kann bekannter Bauart sein. Stattdessen kann das getrocknete Klärschlamm-Granulat zur Teerabscheidung verwendet werden: In diesem Fall wird das im Vergaser 2 gewonnene brennbare Gas zur Teerabscheidung durch das Klärschlamm-Granulat geleitet, bevor das Klärschlamm-Granulat zur Vergasung dem Vergaser 2 zugeführt wird. Der Teerabscheider 3 enthält in diesem Fall das zu vergasende Klärschlamm-Granulat bzw. der Teerabscheider 3 wird von einem Behältnis gebildet, welches das Klärschlamm-Granulat enthält.

In einem der beiden Gaswäscher 4, beispielsweise dem ersten Gaswäscher 4, wird Schwefelsäure aus dem brennbaren Gas ausgewaschen. Das Auswaschen erfolgt beispielsweise mit einer alkalischen wässrigen Lösung als Waschflüssigkeit, die im Kreislauf geführt wird. Außer Schwefelwasserstoff werden auch andere saure Gase aus dem durch die Vergasung gewonnenen brennbaren Gas ausgewaschen, wenn solche sauren Gase im brennbaren Gas enthalten sind. Der Gaswäscher 4 kann auch als Schwefelwasserstoff-Wäscher bezeichnet werden. Im anderen Gaswäscher 5, im Ausführungsbeispiel dem zweiten Gaswäscher 5, wird Ammoniak aus dem brennbaren, durch die Vergasung gewonnen Gas ausgewaschen. Dieser Gaswäscher 5 kann deswegen auch als Ammoniak-Wäscher bezeichnet werden. Als Waschflüssigkeit dient beispielsweise neutrales oder saures Wasser. Auch im zweiten Gaswäscher 5 können außer Ammoniak weitere Bestandteile aus dem brennbaren Gas ausgewaschen werden, sofern solche vorhanden sind.

Im Filter 6, das den beiden Gaswäschern 4, 5 nachgeschaltet ist, werden Rest-Schadstoffe aus dem brennbaren Gas ausgefiltert, die in den Gaswäschern 4, 5 nicht oder nicht vollständig ausgewaschen worden sind. Als Filtermaterial wird der teilchenförmige Feststoff verwendet, der bei der Vergasung des Klärschlamms im Feststoffvergaser 2 anfällt und aus diesem in den Sammelbehälter 7 gelangt. Dieser teilchenförmige Feststoff weist eine offenporige Struktur mit großer innerer Oberfläche auf, die der Struktur von Aktivkohle vergleichbar ist. Der bei der Vergasung anfallende Feststoff weist auch Adsorptionseigenschafen auf, die den Adsorptionseigenschaften von Aktivkohle vergleichbar sind, wenn auch die Adsorptionswirkung geringer als die von Aktivkohle ist. Der teilchenförmige, auch als Granulat oder als Rückstand zu bezeichnende Feststoff, der bei der Vergasung von Klärschlamm im Vergaser 2 anfällt, lässt sich deswegen als Filtermaterial anstelle von Aktivkohle verwenden. Im Ausführungsbeispiel wird der Feststoff als Filtermaterial in dem Filter 6 verwendet, das den Gaswäschern 4, 5 nachgeschaltet ist. Es filtert u. a. Schwefelwasserstoff aus dem durch die Vergasung gewonnenen, brennbaren Gas, der trotz der Gaswäsche in den Gaswäschern 4, 5 noch im brennbaren Gas verblieben ist. Schwefelwasserstoff wird nahezu 100 % aus dem durch die Vergasung gewonnenen brennbaren Gas entfernt.

Denkbar ist auch einen pulverförmigen Feststoff als Filtermaterial im Filter 6 zu verwenden, der bei der Vergasung als Rückstand oder Asche anfällt und der mit dem brennbaren Gas aus dem Vergaser 2 ausströmt. Dieser pulverförmige Feststoff muss aus dem brennbaren Gas abgetrennt werden, was beispielsweise mit einem Zyklon-Abscheider erfolgen kann, um das Pulver als Filtermaterial im Filter 6 verwenden zu können. Das Pulver aus dem Vergaser 2 hat grundsätzlich die gleichen Adsorptionseigenschaften wie das Granulat aus dem Vergaser 2 und ist insofern ebenso als Filtermaterial geeignet. Nachteilig ist, dass geeignete Vorkehrungen getroffen werden müssen, damit das brennbare Gas, das das Filter 6 durchströmt, das Pulver nicht mitnimmt. Es muss also beispielsweise ein entsprechend feinporiges Filtergewebe oder dgl. verwendet werden, welches das Pulver nicht durchlässt. Deswegen ist das Granulat aus dem Vergaser 2 besser als Filtermaterial zum Filtern des brennbaren Gases geeignet.

Anstelle von Klärschlamm können im Feststoffvergaser 2 auch andere Biomasse oder allgemein Feststoffe vergast werden.

## Patentansprüche

1. Vergasungsanlage zur Gewinnung von brennbarem Gas, mit einem Vergaser (2), **dadurch gekennzeichnet, dass** dem Vergaser (2) ein Filter (6) nachgeschaltet ist, das als Filtermaterial einen bei der Vergasung im Vergaser (2) anfallenden Feststoff aufweist.

2. Vergasungsanlage nach Anspruch 1, **dadurch gekennzeichnet, dass** ein bei der Vergasung im Vergaser (2) anfallendes Granulat als Filtermaterial dient.

3. Vergasungsanlage nach Anspruch 1 oder 2, **dadurch gekennzeichnet, dass** dem Vergaser (2) ein Teerfilter oder Teerabscheider (3) nachgeschaltet ist.

4. Vergasungsanlage nach einem der Ansprüche 1 bis 3, **dadurch gekennzeichnet, dass** zwischen dem Vergaser (2) und dem Filter (6) mindestens ein Gaswäscher (4, 5) angeordnet ist.

5. Vergasungsanlage nach Anspruch 4, **dadurch gekennzeichnet, dass** zwischen dem Vergaser (2) und dem Filter (6) ein Schwefelwasserstoff-Wäscher (4) angeordnet ist.

6. Verfahren zur Gewinnung von brennbarem Gas durch Vergasung, **dadurch gekennzeichnet, dass** das brennbare Gas mit einem Feststoff gefiltert wird, der bei der Vergasung anfällt.

7. Verfahren nach Anspruch 6, **dadurch gekennzeichnet, dass** das brennbare Gas mit einem Feststoff-Granulat gefiltert wird, das bei der Vergasung anfällt.

8. Verfahren nach Anspruch 6 oder 7, **dadurch gekennzeichnet, dass** nach dem Vergasen und vor dem Filtern Teer aus dem Gas abgetrennt wird.

9. Verfahren nach einem der Ansprüche 6 bis 8, **dadurch gekennzeichnet, dass** das brennbare Gas von Schwefelwasserstoff gereinigt und danach mit dem Feststoff gefiltert wird, der bei der Vergasung anfällt.

10. Verfahren nach einem der Ansprüche 6 bis 9, **dadurch gekennzeichnet, dass** Biomasse, insbesondere Klärschlamm vergast wird.
